# EUROPÄISCHE PATENTSCHRIFT

(11) **EP 0 555 811 B1**
(45) Veröffentlichungstag und Bekanntmachung des Hinweises auf die Patenterteilung: **18.09.1996**
(21) Anmeldenummer: 93101981.4
(22) Anmeldetag: 09.02.1993
(51) Int. Cl.: H01B 7/00

(54) **Kabelbaumartige Leitungseinheit insbesondere für Automobile**
Cable-harnesslike line assembly, in particular for motor-vehicles
Ensemble de ligne du type à faisceau de câbles, en particulier pour automobiles

(30) Priorität: 10.02.1992 DE 9201789 U
(43) Veröffentlichungstag der Anmeldung: 18.08.1993
(73) Patentinhaber: Leonische Drahtwerke AG, D-90402 Nürnberg (DE)
(72) Erfinder: Reichinger, Gerhard, D-8540 Rednitzhembach (DE)
(74) Vertreter: Tergau, Enno, Dipl.-Ing.

(56) Entgegenhaltungen:
- EP-A- 0 418 882
- DE-A- 2 617 653

## Beschreibung

Die Erfindung betrifft eine durch kabelbaumartige Zusammenfassung mehrerer nebeneinanderliegender Versorgungsleitungen gebildete Leitungseinheit insbesondere für Automobile. Deren Versorgungsleitungen sind in der Regel elektrische Leiter beispielsweise zur Versorgung unterschiedlicher Antriebsaggregate etwa zur Sitzhöhenverstellung, für einen Heckscheibenwischer, für die elektrische Beleuchtung pp. Es können aber auch Glasfaserkabel, Leuchtdiodenleiter oder Schlauchleitungen z.B. für Bremsflüssigkeit oder für Heckscheibenwaschwasser pp. sein.

In der modernen Automobiltechnik werden diese Versorgungsleitungen zu Zwecken der Vereinfachung ihrer Montage zu kabelbaumartigen Einheiten zusammengefaßt, in denen sie durch den Umfassungsmantel zusätzlich gegen schädliche Außeneinflüsse, auch Feuchtigkeitseinflüsse geschützt sind. Derartige Leitungseinheiten sind beispielsweise Gegenstand von EP 0288 752 A1 oder EP 0418 882 A2.

In der Automobilindustrie ganz allgemein und dort speziell bei Personenkraftwagen werden die einzelnen Modelle in einer preiswerten Normalausstattung und gegen Aufpreis mit Zusatzausstattungen bis zu aufwendigen Luxusausstattungen angeboten. Je nach Ausstattungsgrad variiert daher zunehmend die Anzahl der von elektrischer oder anderweitiger Versorgung abhängigen Zusatzaggregate, welchem Zweck diese auch immer dienen mögen (Sicherheit, Bequemlichkeit pp). Dementsprechend steigt die Zahl der je nach Ausstattungsgrad für ein Fahrzeugmodell erforderlichen Versorgungsleistungen.

Aus logistischen Gesichtspunkten ist es zweckmäßig, für ein Fahrzeugmodell unabhängig von seiner Ausstattungsvariante immer dieselbe Leitungseinheit zu verwenden. Dann aber muß die Leitungseinheit hinsichtlich Art und Vielfalt der in ihr enthaltenen Leitungen nach der Modellvariante mit maximaler Ausstattung ausgelegt sein, also ein Maximum an Versorgungsleitungen aufweisen. Das wiederum macht die Leitungseinheit nicht nur teuer, sondern verleiht ihr auch ein hohes Eigengewicht. Die Verwendung einer solchen Leitungseinheit für das Fahrzeugmodell in Normalausstattung ist unter wirtschaftlichen Gesichtspunkten nachteilig.

Aus G 90 15 327.8 ist bereits bekannt, ein Verbundkabel aus mindestens zwei unterschiedlichen Kabeln dadurch herzustellen, daß ein mit einem längsgerichteten Raststeg versehenes Kabel mit einem anderen, eine auf den Raststeg abgestimmte, also mit ihm korrespondierende Rastnut aufweisenden Kabel über die gesamte Kabellänge miteinander verbunden ist. Dadurch, daß der Raststeg und die Rastnut jeweils in Kabellängsrichtung verlaufen und die Kabelumhüllung und somit der Raststeg und die Seitenwände der Rastnut eine entsprechende Eigenelastizität aufweisen, lassen sich die beiden Teile des Verbundkabels leicht auseinanderziehen, d.h. voneinander lösen. Daher ist dort auch vorgeschlagen, die über die Rastverbindungen verbundenen Kabel zumindest in ihren Endabschnitten über zusätzliche Kabelbinder zusammenzuhalten.

Aus DE 26 17 653 A1 ist ein Kabelbaum bekannt, der aus mehreren formschlüssig zusammengefügten Leitungskabeln besteht. Jedes Leitungskabel enthält mehrere parallel verlaufende Leitungsadern. Zwei benachbarte Leitungskabel werden zusammengefügt, indem ein stegartiger Ansatz des einen Leitungskabels etwa formschlüssig in eine mit dem Ansatz korrespondierende Nut des zweiten Leitungskabels eingeschoben wird. Wie bei dem aus G 90 15 327.8 bekannten Verbundkabel verlaufen der Ansatz und die Nut in Kabellängsrichtung, wodurch die bereits zu G 90 15 327.8 geschilderten Nachteile entstehen.

Der Erfindung liegt die Aufgabe zugrunde, eine Leitungseinheit der eingangs genannten Art so auszugestalten, daß sie einerseits die Vorteile eines herkömmlichen kabelbaumartigen Aufbaus beibehält, sich aber andererseits flexibel den Notwendigkeiten unterschiedlicher Ausstattungsvarianten anpaßt und dabei eine feste, nicht so leicht lösbare Verbindung zwischen Leitungseinheiten ermöglicht. Diese Aufgabe wird durch das Kennzeichen des Anspruches 1 gelöst.

Diese Lösung ermöglicht eine mehrteilige Modulbauweise. Je nach der gewünschten Ausstattungsvariante werden zwei, drei oder auch noch mehr aus logistischen Gründen zweckmäßig gleichgestaltete, in ihrer Konsistenz flexible Leitungssätze durch laterales Nebeneinander- oder Untereinandersetzen miteinander verbunden. Sie bilden dann in miteinander verbundener, insbesondere verklammerter Form die komplette, in sich leicht flexible Leitungseinheit. Aus weiteren logistischen Überlegungen kann es zweckmäßig sein, jedem Leitungssatz einer solchen Leitungseinheit nicht nur eine weitgehend gleiche äußere Umrißform, sondern auch einen gleichen inneren Aufbau zu verleihen. Die weitgehend elektrische Natur der Versorgungsleitungen ermöglicht deren unterschiedliche Zweckbindung je nach Ausstattungsvariante des Modells.

Der modulartige Aufbau der Leitungseinheit ermöglicht auch deren Fertigstellung erst mit der Montage am Fahrzeug. Es können beispielsweise die einzelnen Leitungssätze hintereinander am Fahrzeug angebracht und erst in ihrer Anbringungsstellung miteinander zur Leitungseinheit verbunden werden. Dies erhöht den Gestaltungsspielraum des Fahrzeugs und kann auch den Montagevorgang als solchen erleichtern, weil die einzelnen Leitungssätze einfacher und flexibler handhabbar sind als die aus ihnen hergestellte Leitungseinheit.

Durch die im wesentlichen quer zum Leitungsverlauf weisende Ausrichtung der nach Art von Nut und Feder ausgebildeten Formschlußverbindungsmittel ist eine besondere Festigkeit der Verbindung der Leitungseinheiten gewährleistet, da nämlich auch die Hinterschneidungen quer zum Leitungslängsverlauf wirksam sind.

Durch das Merkmal des Anspruches 2 haben die Formschlußverbindungsmittel eine Wirksamkeit über den gesamten Bereich ihrer Lähgsausrichtung.

Durch entsprechend enge Nebeneinanderlage der Formschlußverbindungsmittel in Richtung des Leitungsverlaufes läßt sich die Festigkeit der Verbindung weiter erhöhen und die Verbindung kann in unterschiedlichen, fein abgestuften Längenpositionen ohne zusätzliche Sicherungsmittel positionsstabil gelöst werden..

Es sind aber auch Einbaufälle denkbar, in denen die gegenseitige Verklammerung nur für einen begrenzten Montagezeitraum erforderlich ist, beispielsweise wenn die Leitungseinheit in einem beim Ende der Montage verschließbaren Führungshohlraum untergebracht wird oder wenn Lagesicherungsmittel für die Leitungseinheit am Fahrzeug vorgesehen sind. Dafür dienen weniger dauerhaft wirksame Hinterschneidungsformen an den Formschlußmitteln.

Die Ausgestaltung der nach einer Montage aneinanderliegenden Mantelflächen mit aus ihnen vorstehenden Formschlußverbindungsmitteln bildet außerdem einen Sicherungsabstand für die in unterschiedlichen Leitungssätzen enthaltenen Leitungen. Wird beispielsweise bei einer Normalausstattung nur eine Leitungseinheit benötigt, so sind die Formschlußmittel nicht funktionslos. Sie erfüllen dann gewissermaßen eine Pufferfunktion, indem sie den Leitungssatz gegenüber der Karosserie distanzierende Pufferteile bilden, die eine zusätzliche Beschädigungssicherung für die im Leitungssatz enthaltenen Leitungen sind.

Es sind Anwendungsfälle denkbar, bei denen in gleicher Ausgestaltung ein Leitungssatz sowohl für alleinige Verwendung als auch in einer Leitungseinheit mit zwei, drei pp. aneinander angesetzten Leitungssätzen verwendbar ist.

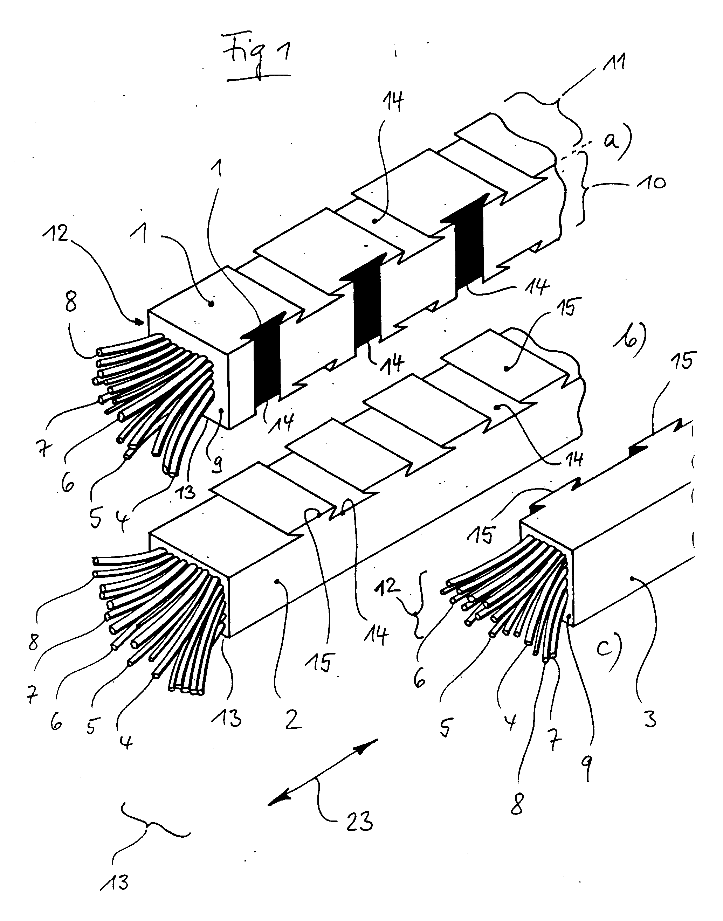

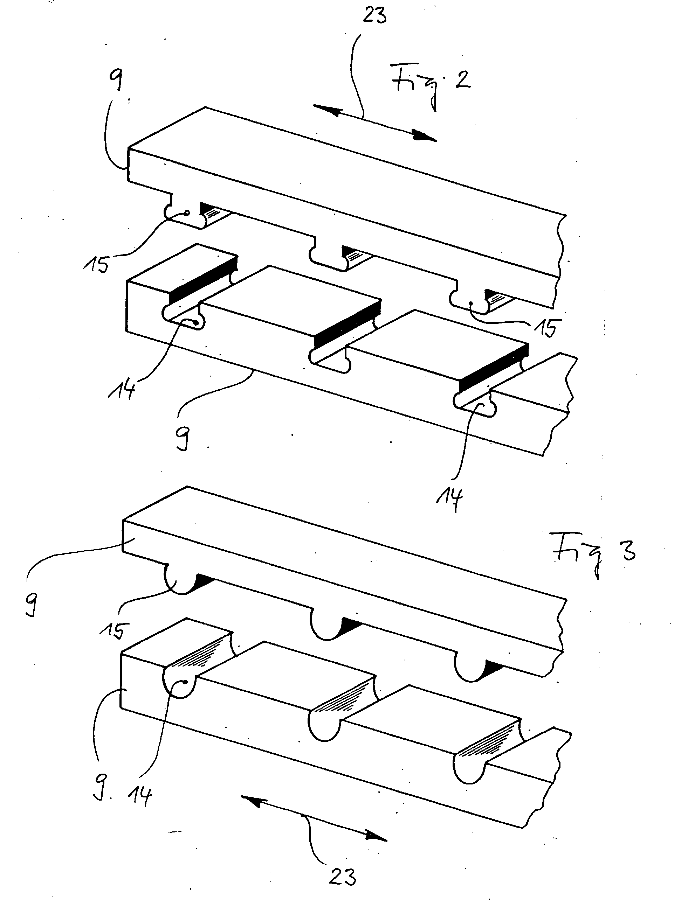

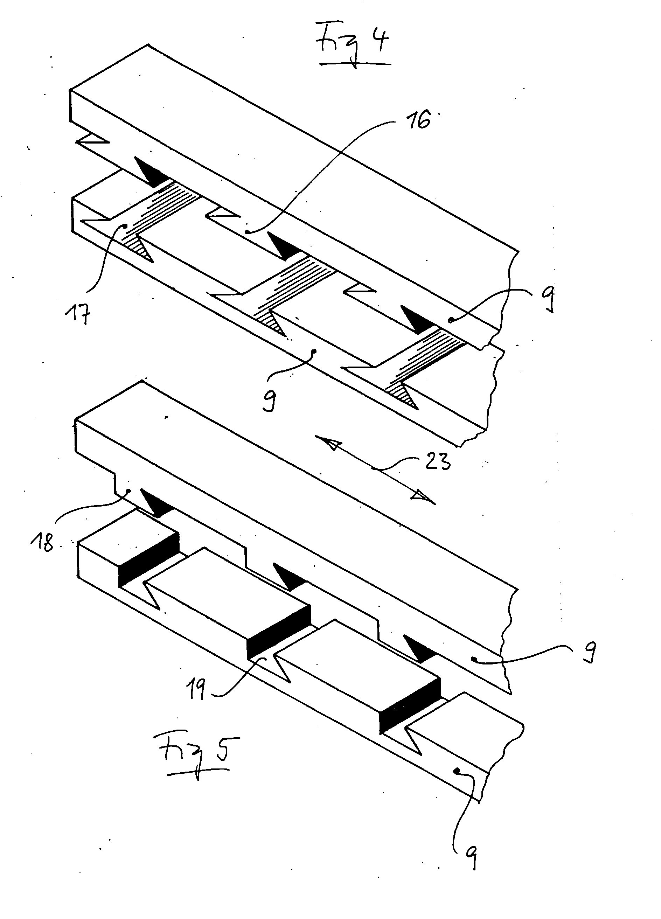

Die Ausgestaltung nach Anspruch 8 berücksichtigt, daß solche Leitungseinheiten bzw. Leitungssätze in der Regel an der Unterseite der Fahrzeugkarosse angebracht und von ihrer Unterseite her montiert werden. Eine Verbindung benachbarter Leitungssätze ermöglicht auch dann nur kurze Wege der Relativverschiebung zwischen ihnen ohne Störung seitens in der Nähe vorhandener Karosserieteile. Diese Ausrichtung ist dann besonders vorteilhaft, wenn die für eine dauerhafte Verklammerung erforderlichen Hinterschneidungen der Verbindungsmittel so ausgestaltet und von einer solchen stofflichen Beschaffenheit sind, daß sie zur Erreichung ihrer Verbindungs-Endstellung nicht elastisch nach dem Druckknopfprinzip ineinandergeschnappt werden können (s. Fig. 3).

Durch das Merkmal des Anspruches 10 ist die Verklammerungswirkung eines Formschlußverbindungsmittels über die gesamte Breite eines Leitungssatzes wirksam. Anspruch 11 ist ein Weg zur Erhöhung der Wirksamkeitslänge bei gleicher Breitenabmessung eines Leitungssatzes.

Die erfindungsgemäße modulare Bauweise kann die Montage der Leitungseinheit an der Fahrzeugkarosserie auch dadurch vereinfachen, daß deren Fixierung an der Karosserie beispielsweise unter Einschluß eines Karosserieteiles im Bereich einer Trennfuge zwischen zwei Leitungssätzen erfolgt. Die einzelnen Leitungssätze können prinzipiell herkömmlich ausgestaltet sein, beispielsweise auch eingearbeitete Leitungskanäle für das nachträgliche Einlegen von Leitungen analog der Lehre von EP 0418 882 A2 aufweisen.

Der Gegenstand der Erfindung wird anhand von in deren Figuren dargestellten Ausführungsbeispielen näher erläutert. Es zeigen:
- Fig. 1: Gestaltungsvarianten a), b) und c) einzelner Leitungssätze, die zu einer Leitungseinheit miteinander formschlüssig verbindbar sind,
- Fig. 2 - 5: unterschiedliche Arten von Formschlußverbindungen zum lateralen Aneinandersetzen von Leitungssätzen zu einer Leitungseinheit in schematischer Form.

Die erfindungsgemäße Leitungseinheit enthält mehrere Leitungssätze 1-3. Jeder Leitungssatz 1-3 besteht aus einer Zusammenfassung mehrerer nebeneinanderliegender, gleich ausgerichteter Leitungen 4,5,6,7,8 ff. Die Leitungen 4-8 können Kabel, Lichtleiter, Flüssigkeitsleitungen pp. sein. Die Zusammenfassung der Leitungen 4-8 ff. erfolgt durch einen Mantel 9 aus Polyurethan(= PU)-Schaum, insbesondere aus einem schwer entflammbaren Zweikomponenten-PU, welches über einen großen Temperaturbereich beständig ist. Die Schaumhärte des Mantelwerkstoffes kann variabel ausgestaltet sein. Überhaupt sind für den Mantel alle herkömmlich bekannten Ausgestaltungen denkbar, die aus dem Stand der Technik geläufig sind.

Die Leitungssätze 1-3 weisen an mindestens einer ihrer Flanken 10-13 Verbindungsmittel auf, die eine Verbindung zwischen den Leitungssätzen 1-3 in deren gleichgerichteter Nebeneinandertage ermöglichen. Diese Verbindungsmittel sind über die Länge (Längsrichtung 23) verteilt in mindestens einem Flankenbereich 10-13 angeordnet.

Die Formschlußmittel sind nach Art von Nut und Feder ineinandergreifende Flanken-Ausnehmungen 14 bzw. -Vorsprünge 15. Jeder Leitungssatz 1-3 kann beispielsweise an einer Flanke 10 solche Nuten 14 und an seiner diametral gegenüberliegenden Flanke 12 entsprechende federartige Vorsprünge 15 aufweisen, so daß hinsichtlich der äußeren Mantelgestaltung bei zwei miteinander zu verbindenden Leitungssätzen Formidentität vorliegen kann. Es sind durchaus unterschiedliche Querschnittsformen von Nut 14 bzw. mit ihr zusammenwirkendem Vorsprung 15 denkbar. Eine solche Querschnittsform ist beispielsweise auch Gegenstand der Darstellung in Fig. 3. Die dortige Querschnittsform von Nut 14 und Vorsprung 15 mit einem über einen Halbkreis hinausgehenden Kreisabschnitt ermöglicht beispielsweise bei entsprechender stofflicher Eigenschaft des Mantelwerkstoffes ein leichter lösbares, druckknopfartiges Ineinanderschnappen, so daß die beiden benachbarten Flankenbereiche 9,11 zweier nebeneinanderliegender Leitungssätze aneinanderliegen.

Die Verbindungsmittel bzw. Nut und Feder können auch zu schwalbenschwanzartigem Formschlußeingriff miteinander ausgestaltet sein, wie er beispielsweise Gegenstand von Fig. 4 ist. Dort weisen die Vorsprungsrippe 16 und analog die Nut 17 des Gegenmantels einen trapezförmigen Querschnitt auf. Eine modifizierte Trapez-Querschnittsform ("einseitiger Schwalbenschwanz") ist Gegenstand von Fig. 5 mit dort dem Vorsprungsquerschnitt 18 und dem Nutquerschnitt 19.

Die Nuten 14,17,19 und die entsprechenden Vorsprünge 15,16,18 verlaufen etwa rechtwinklig zur Längsrichtung 23 der Leitungseinheiten. Dadurch sind für ihre gegenseitige Verbindung nur kurze Relativ-Verschiebewege erforderlich.

Die in Fig. 1 unter a)-c) dargestellten drei Leitungssätze sind nach Art einer Explosionszeichnung nebeneinander gestellt. Zu ihrer Verklammerung bzw. Verbindung zu einer Leitungseinheit wird beispielsweise der Leitungssatz 3 mit der Seite seiner Flanke 12 verklammert mit dem Leitungssatz 1 im Bereich von dessen Flanke 10. Dabei greifen die Federvorsprünge 15 bzw. Vorsprungsrippen 16 formschlüssig in die entsprechenden Gegennuten 14,17 an der Flanke 10 des Leitungssatzes 1. Dabei liegt dann der Leitungssatz 1 mit seiner Flanke 10 an der Flanke 12 des Leitungssatzes 3 flächig an.

## Patentansprüche

1. Durch kabelbaumartige Zusammenfassung mehrerer im wesentlichen parallel nebeneinanderliegender Versorgungsleitungen (4-8) gebildete Leitungseinheit, welche aus mehreren
- jeweils einen z. B. aus Kunststoff hergestellten Mantel (9) für die zugeordneten Versorgungsleitungen (4-8) enthaltenden und
- formschlüssig miteinander verbindbaren
Leitungssätzen (1-3) besteht,
dadurch gekennzeichnet,
daß die Leitungssätze (1-3) in etwa paralleler Aneinanderlage an ihren einander gegenüberliegenden Flanken (10-13) durch
- quer zu ihrer Längsrichtung (23) verlaufende,
- miteinander korrespondierende,
- mit Hinterschneidungen versehene und
- nach Art von Nut und Feder wirksame
Formschlußverbindungsmittel (15, 16, 18 bzw. 14, 17, 19) verbunden sind.

2. Leitungseinheit nach Anspruch 1,
dadurch gekennzeichnet,
daß die die Formschlußverbindungsmittel (15,16,18 bzw. 14,17,19) tragenden Flanken (10-13) der Leitungssätze (1-3) eben sind.

3. Leitungseinheit nach Anspruch 1 oder 2,
dadurch gekennzeichnet,
daß ihre Leitungssätze (1-3) und/oder die Formschlußmittel (15,16,18 bzw. 14,17,19) eine gleichgestaltete Querschnittsform aufweisen.

4. Leitungseinheit nach einem oder mehreren der vorgehenden Ansprüche,
dadurch gekennzeichnet,
daß die Leitungssätze (1-3) einen rechteckigen oder quadratischen Querschnitt aufweisen.

5. Leitungseinheit nach einem der Ansprüch 1 bis 4,
dadurch gekennzeichnet,
daß die Formschlußverbindungsmittel über die Länge der Leitungssätze (1-3) verteilt an diesen angeordnet sind.

6. Leitungseinheit nach Anspruch 5,
gekennzeichnet durch
eine im wesentlichen gleichmäßige Verteilung der Verbindungsmittel.

7. Leitungseinheit nach einem oder mehreren der vorhergehenden Ansprüche,
dadurch gekennzeichnet,
daß die Formschlußverbindungsmittel (15,16,18 bzw. 14,17,19) in Verbindungsstellung mit Hinterschneidungen zu schwalbenschwanzartiger Wirksamkeit ineinandergreifen.

8. Leitungseinheit nach Anspruch 7,
gekennzeichnet durch
einen zur Leitungslängsrichtung (23) etwa rechtwinkligen Verlauf der Längsachsen von Nut (14,17) und Feder (15,16).

9. Leitungseinheit nach Anspruch 8,
dadurch gekennzeichnet,
daß benachbarte Leitungssätze (1-3) zu ihrer flankenseitigen Verbindung in etwa rechtwinklig zu ihrem Leitungs- oder Längsverlauf (13) weisender Richtung ineinanderschiebbar sind.

10. Leitungseinheit nach einem oder mehreren der vorhergehenden Ansprüche,
dadurch gekennzeichnet,
daß Nut (14,17) und Feder (15,16) über ihre gesamte Länge eine gleiche Querschnittsform aufweisen und sich über die gesamte Breite eines Leitungssatzes (1-3) erstrecken.

11. Leitungseinheit nach einem oder mehreren der vorhergehenden Ansprüche,
dadurch gekennzeichnet,
daß die Formschlußvorsprünge (15,16,18) und Formausnehmungen (14,17,19) benachbarter Oberflächen eines Leitungssatzes (1-3) in dessen Längsrichtung (23) gegeneinander versetzt sind (Fig. 1a).

## Claims

1. A lead unit formed by a cable harness-type combination of several supply lines (4-8) lying substantially parallel next to each other and consisting of several lead sets (1-3), which
- comprise each a sheath (9) for example of a synthetic material for the respective supply lines (4-8) and
- are connectable form fitted with each other,
characterized in that
the lead sets (1-3) are connected at their sides (10-13) lying opposite each other in an approximately parallel position on each other by form fit connecting means (15,16,18 or 14,17,19), which
- extend transversely to their longitudinal direction (23),
- correspond to each other,
- are provided with undercuts and
- act in the manner of tongues and grooves.

2. A lead unit according to claim 1,
characterized in that
the sides (10 - 13) of the lead sets (1 - 3) carrying the form fit connecting means (15, 16, 18 or 14, 17, 19) are planar.

3. A lead unit according to claim 1 or 2,
characterized in that
its lead sets (1 - 3) and/or the form fit connecting means (15, 16, 18 or 14, 17, 19) have a cross-sectional shape of the same form.

4. A lead unit according to one or more of the preceding claims,
characterized in that
the lead sets (1 - 3) have a rectangular or square cross-section.

5. A lead unit according to one of claims 1 to 4,
characterized in that
the form fit connecting means are arranged for distribution over the length of the lead sets (1 - 3) on the latter.

6. A lead unit according to claim 5,
characterized by
a substantially uniform distribution of the connecting means.

7. A lead unit according to one or more of the preceding claims,
characterized in that
in their connected position, the form fit connecting means (15, 16, 18 or 14, 17, 19) with an undercut engage in each other with a dovetail-type effect.

8. A lead unit according to claim 7,
characterized by
the fact that the longitudinal axes of the groove (14, 17) and tongue (15, 16) extend approximately at right angles to the longitudinal direction (23).

9. A lead unit according to claim 8,
characterized in that
the adjoining lead sets (1 - 3) can be inserted into each other for connection at their sides in a direction extending approximately at right angles to their line direction or longitudinal direction (13).

10. A lead unit according to one or more of the preceding claims,
characterized in that
the groove (14, 17) and tongue (15, 16) have the same cross-sectional shape over their whole length and extend over the whole width of one lead set (1 - 3).

11. A lead unit according to one or more of the preceding claims,
characterized in that
the form fit projections (15, 16, 18) and the form fit recesses (14, 17, 19) of adjoining surfaces of one lead set (1 - 3) are offset with respect to each other in its longitudinal direction (23).

## Revendications

1. Unité de conducteurs, formée par l'assemblage à la manière de faisceau de câbles de plusieurs conducteurs d'alimentation (4-8) disposés côte à côte sensiblement parallèlement et consistée en plusieurs ensembles de conducteurs (1-3) qui
- comprennent chacun une enveloppe (9) en matière plastique p.ex. pour les conducteurs d'alimentation (4-8) respectifs et
- sont reliables entre eux par assemblage de forme, caractérisée en ce que les ensembles de conducteurs (1-3) sont reliés de manière contiguë sensiblement parallèle, au niveau de leurs flancs (10-13) mutuellement opposés par des dispositifs de liaison par assemblage de forme (15,16,18 ou 14,17,19) qui
- s'étendent transversalement à leur direction longitudinale (23),
- correspondent entre-eux,
- sont munis de contre-dépouilles, et
- agissent à la manière de rainures et de languettes.

2. Unité de conducteurs selon la revendication 1, caractérisée en ce que les flancs (10, 13) des ensembles de conducteurs (1-3) qui portent les dispositifs de liaison par assemblage de forme (15, 16, 18 ou 14, 17, 19) sont plans.

3. Unité de conducteurs selon la revendication 1 ou 2, caractérisée en ce que ses ensembles de conducteurs (1-3) et/ou les dispositifs de liaison par assemblage de forme (15, 16, 18 ou 14, 17, 19) présentent une forme en section droite identique.

4. Unité de conducteurs selon une ou plusieurs des revendications précédentes, caractérisée en ce que les ensembles de conducteurs (1-3) présentent une section droite rectangulaire ou carrée.

5. Unité de conducteurs selon l'une des revendications 1 à 4, caractérisée en ce que les dispositifs de liaison par assemblage de forme sont disposés sur les ensembles de conducteurs (1-3) en étant répartis sur leur longueur.

6. Unité de conducteurs selon la revendication 5, caractérisée par une répartition sensiblement uniforme des dispositifs de liaision.

7. Unité de conducteurs selon une ou plusieurs des revendications précédentes, caractérisée en ce que, dans la position de liaison, les dispositifs de liaison par assemblage de forme (15, 16, 18 et 14, 17, 19) coopèrent entre-eux par des contre-dépouilles pour former un assemblage en queue d'aronde.

8. Unité de conducteurs selon la revendication 7, caractérisée en ce que les axes longitudinaux des rainures (14, 17) et des languettes (15, 16) s'étendent sensiblement perpendiculairement à la direction longitudinale (23) des conducteurs.

9. Unité de conducteurs selon la revendication 8, caractérisée en ce que les ensembles de conducteurs (1-3) voisins peuvent coulisser les uns dans les autres au niveau de leur liaison du côté des flancs dans une direction sensiblement perpendiculaire à l'étendue de leurs conducteurs ou longitudinale (13).

10. Unité de conducteurs selon une ou plusieurs des revendications précédentes, caractérisée en ce que les rainures (14, 17) et les languettes (15, 16) présentent une forme en section droite identique sur toute leur longueur et s'étendent sur toute la largeur d'un ensemble de conducteurs (1-3).

11. Unité de conducteurs selon une ou plusieurs des revendications précédentes, caractérisée en ce que les protubérances d'assemblage de forme (15, 16, 18) et les évidements d'assemblage de forme (14, 17, 19) de surfaces voisines d'un ensemble de conducteurs (1-3) sont décalées mutuellement dans sa direction longitudinale (23) (Figure 1a).
